# EUROPÄISCHE PATENTSCHRIFT

(11) **EP 0 689 694 B1**
(45) Veröffentlichungstag und Bekanntmachung des Hinweises auf die Patenterteilung: **02.01.1997**
(21) Anmeldenummer: 94908277.0
(22) Anmeldetag: 01.03.1994
(51) Int. Cl.: G06F 9/45

(54) **VERFAHREN ZUR MASCHINELLEN ERZEUGUNG VON NEBENLÄUFIG BEARBEITBAREN BEFEHLSGRUPPEN AUS EINEM PROGRAMM FÜR SUPERSKALARE MIKROPROZESSOREN**
PROCESS FOR THE MACHINE-GENERATION OF PARALLEL PROCESSABLE COMMAND GROUPS FROM A PROGRAM FOR SUPER-SCALAR MICROPROCESSORS
PROCEDE DE PRODUCTION AUTOMATIQUE DE GROUPES D'INSTRUCTIONS POUVANT ETRE TRAITES DE MANIERE PARALLELE A PARTIR D'UN PROGRAMME POUR PROCESSEURS SUPERSCALAIRES

(30) Priorität: 15.03.1993 DE 4308173
(43) Veröffentlichungstag der Anmeldung: 03.01.1996
(73) Patentinhaber: SIEMENS AKTIENGESELLSCHAFT, 80333 München (DE)
(72) Erfinder: SCHEPERS, Jörg, D-81739 München (DE)
(86) Internationale Anmeldenummer: DE9400221
(87) Internationale Veröffentlichungsnummer: WO9422079

(56) Entgegenhaltungen:
- EP-A- 0 501 653
- WO-A-91/20031
- SIGPLAN NOTICES Bd. 21, Nr. 7 , Juli 1986 , PALO ALTO, US, Seiten 11 - 16 GIBBONS AND MUCHNICK 'Efficient instruction scheduling for a pipelined architecture' in der Anmeldung erwähnt
- IBM JOURNAL OF RESEARCH AND DEVELOPMENT Bd. 34, Nr. 1 , Januar 1990 , NEW YORK US Seiten 85 - 92 WARREN 'Instruction scheduling fior the IBM system/6000 processor'
- COMPUTER ARCHITECTURE NEWS Bd. 21, Nr. 1 , März 1993 , NEW YORK US Seiten 4 - 11 INOUE AND TAKEDA 'Performance evaluation for various configurations of superscalar processors'
- SIGPLAN NOTICES Bd. 21, Nr. 7 , Juli 1986 , PALO ALTO, US, Seiten 11 - 16 GIBBONS AND MUCHNICK 'Efficient instruction scheduling for a pipelined architecture'
- IBM JOURNAL OF RESEARCH AND DEVELOPMENT Bd. 34, Nr. 1 , Januar 1990 , NEW YORK US Seiten 85 - 92 WARREN 'Instruction scheduling for the IBM system/6000 processor'

## Beschreibung

Moderne Mikroprozessoren bestehen zumeist aus mehreren funktionalen Einheiten, im folgenden Verarbeitungseinheiten genannt, die Maschinenbefehle parallel ausführen können. Diese Eigenschaft wird als superskalar bezeichnet. Um alle Verarbeitungseinheiten auszulasten, müßten superskalare Prozessoren in einem Taktzyklus mehrere Befehle als Gruppe zur Ausführung bereitstellen. Da Verarbeitungseinheiten jedoch meist nur bestimmte Typen von Maschinenbefehlen, wie z.B. Load/-Store-oder Gleitpunktbefehle, ausführen können, muß bei der Befehlsbereitstellung bereits darauf geachtet werden, daß alle Befehle einer Gruppe auch auf entsprechenden Verarbeitungseinheiten ausführbar sind. Bei der Befehlsgruppierung müssen zudem Daten- und Kontrollflußabhangigkeiten zwischen den Befehlen berücksichtigt werden, um der Semantik des Programms zu genügen. Ferner gilt es Pipelinekonflikte innerhalb den Verarbeitungseinheiten zu minimieren, um für jede einzelne Verarbeitungseinheit einen möglichst hohen Durchsatz zu erzielen.

Die Befehlsgruppierung spielt somit eine wesentliche Rolle für die effektive Leistung eines superskalaren Mikroprozessors. Es gilt die Befehle innerhalb einer Befehlssequenz so anzuordnen, daß möglichst viele Befehle parallel ausgeführt werden können. Dazu sind bereits mehrere Lösungsansätze entwickelt und veröffentlicht worden, die sich in statische und dynamische Schedulingverfahren unterteilen lassen.

Bei dynamischen Schedulingverfahren werden Befehle während der Ausführung umgruppiert. Dies geschieht meist mit Hilfe spezieller Hardware, wie z.B. 'score boards' oder 'reservation tables'. Entsprechende Techniken sind u.a. in Tomasulo, R.M. An Efficient Algorithm for Exploring Multiple Arithmetic Units, IBM Journal of Research and Development, Jan. 1967, S. 25 bis 33 beschrieben. Sie erfordern teilweise erheblichen zusätzlichen Hardwareaufwand und operieren zumeist nur auf einer fest vordefinierten Anzahl von Befehlen (Befehlsfenster).

Statische Scheduling-Verfahren versuchen schon zur Compilezeit eine Befehlssequenz zu erzeugen, in der Pipelinekonflikte minimiert sind und möglichst viele Instruktionen parallel ausgeführt werden können. Verschiedene Algorithmen hierfür wurden insbesondere für Prozessoren mit Befehlspipeline sowie im Bereich der Mikroprogrammierung und für VLIW-Architekturen entwickelt. Ein Überblick über die Algorithmen für Super-Pipelinearchitekturen ist z.B. in Krishnamurthy, S.M., A Brief Survey of Papers on Scheduling for Pipelined Processors; SIGPLAN Notices, Vol. 25, No. 7, 1990, pp. 97-106 gegeben. Diese Algorithmen erzeugen heuristisch eine Befehlssequenz mit möglichst wenig Pipelinekonflikten, wobei jedoch Konflikte zwischen daten-unabhängigen Instruktionen meistens außer acht gelassen werden.

WO-A-91 20031 beschreibt ein Schedulingverfahren wobei zur Compilezeit die Maschinenumgebung simuliert wird und eine Umordnung der Befehle basierend auf dieser Simulation stattfindet.

Die Problematik der Befehlsgruppierung, wie sie bei superskalaren Prozessoren vorkommt, wird ansatzweise in Algorithmen zur Codeerzeugung für VLIW-Architekturen behandelt. Insbesondere kommen dabei globale Scheduling-Verfahren wie Trace- oder Percolation-Scheduling zum Einsatz, die Befehle über Basis-blockgrenzen hinweg verschieben können (z.B. Fisher, J.A., Trace Scheduling: A Technique for Global Microcode Compaction, IEEE Trans. on Comp., July 1981, S. 478 - 490). Im Unterschied zu superskalaren Architekturen müssen bei VLIW-Architekturen jedoch bereits statisch breite Befehlsworte erzeugt werden, d.h. die einzelnen Befehle werden bereits zur Compilezeit den verschiedenen Verarbeitungseinheiten zugeordnet und die Instruktionen eines Befehlswortes werden synchron ausgeführt. Superskalare Architekturen bieten diesbezüglich mehr Freiraume, da Befehlsgruppierungen letztendlich erst zur Laufzeit vorgenommen werden, und nicht alle Befehle einer Gruppe synchron ausgeführt werden.

Die der Erfindung zugrundeliegende Aufgabe besteht darin, ein weiteres Verfahren anzugeben, nach dem auch für superskalare Prozessoren aus einem Programm parallel bearbeitbare Befehlsgruppen erzeugt werden, wobei sichergestellt ist, daß alle Befehle einer Befehlsgruppe ohne zusätzliche Verzögerungszyklen ausführbar sind. Derartige Verzögerungszyklen können bei einem Programm ohne Gruppierung dadurch bedingt sein, daß Datenabhangigkeit zwischen den Befehlen besteht, d.h. ein Befehl ausgeführt sein muß, bevor der datenabhängige folgende Befehl ausgeführt werden kann bzw. in der Pipelinestruktur Pipelinekonflikte bestehen, die sog. Interlock-Zyklen bedingen.

Die Aufgabe wird mit einem Verfahren gemäß den Merkmalen des Anspruchs 1 gelöst.

Ein besonders vorteilhaftes Verfahren zur Erzeugung der Befehlsgruppen ergibt sich aus Anspruch 2.

Das erfindungsgemäße Verfahren verzichtet somit auf ein dynamisches Scheduling-Verfahren, so daß keine zusätzliche Hardware erforderlich ist. Die Einordnung der Befehle in die Befehlsgruppen erfolgt vielmehr bereits bei der Kompilierung d.h. bevor die Befehlsbearbeitung durchgeführt wird.

Anhand eines Ausführungsbeispieles wird die Erfindung weiter erläutert.

Das Verfahren geht aus von einem Scheduling-Verfahren, das in Gibbons, P.B., Muchnick, S.S., Efficient Instruction Scheduling for a Pipelined Architecture, Proc. 86, Sigplan Notices, Vol 21, Nr. 7, Seiten 11 bis 16 beschrieben ist. Zur Erläuterung wird das im folgenden angegebene Programmstuck verwendet, das in Assemblercode geschrieben ist:

| | | | | |
|---|---|---|---|---|
| 1: | 1w | r3, | 0 (r4) | #load word |
| 2: | add | r3, | r3,1 | #add |
| 3: | sl | r4, | 1 | #shift left |
| 4: | sub | r3, | r3,r4 | #subtract' |
| 5: | 1.s | f2 | 0 (r5) | #load float |
| 6: | add.s | f1, | f2,f1 | #add float |
| 7: | abs.s | f3, | f2 | #float absolute |
| 8: | s.s | f3, | 0 (r5) | #store float |
| 9: | bgtz | r3, | L1 | #branch greater zero |

Die einzelnen Befehle sind mit Hilfe der neben den Befehlen angegebenen Erläuterungen leicht verständlich. Zum Beispiel besagt der Befehl 1, daß ein Wort in das Register r3 geladen werden soll und zwar von einem Speicherplatz, dessen Adresse im Register r4 steht. Im zweiten Befehl soll zum Inhalt des Registers r3 eine 1 addiert werden und das Ergebnis in das Register r3 abgespeichert werden. Der Befehl 3 gibt an, daß das im Register r4 stehende Datum um eine Stelle nach links verschoben werden soll. Befehl 4 ist ein Substraktionsbefehl, und zwar soll der Inhalt von Register r4 vom Inhalt von Register r3 subtrahiert werden und das Ergebnis in das Register r3 abgespeichert werden. Die Befehle 1 bis 4 sind sog. integer-Befehle. Die Befehle 5 bis 9 dagegen sind Gleitpunktbefehle. Befehl 5 gibt an, daß eine Gleitpunktzahl in das Gleitpunktregister f2 geladen werden soll, deren Adresse im Register r5 steht. Nach Befehl 6 wird der Inhalt des Gleitpunktregisters fl mit dem Inhalt des Gleitpunktregister f2 addiert und das Ergebnis im Gleitpunktregister fl abgespeichert. Im Befehl 7 wird der Absolutwert der Gleitpunktzahl gebildet, und zwar der Zahl, die im Register f2 steht und das Ergebnis in das Gleitpunktregister f3 abgespeichert. Der Inhalt des Gleitpunktregisters f3 wird im Speicher unter einer Adresse abgespeichert, die im Register r5 steht und schließlich und endlich wird im Befehl 9 ein Verzweigungsbefehl ausgeführt, bei dem zur Adresse L1 gesprungen wird, wenn der Inhalt des Register r3 größer Null ist.

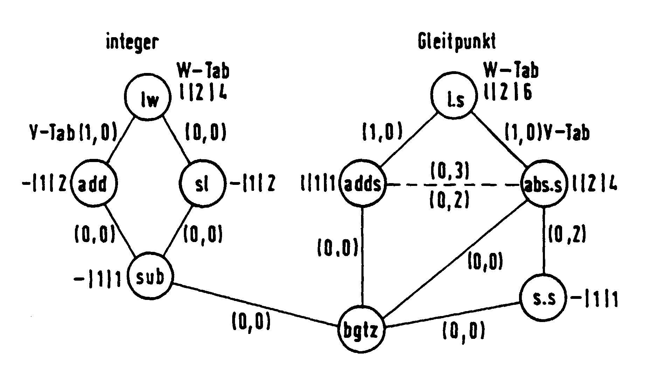

Mit Hilfe der graphischen Darstellung der Figur 1 werden die Datenabhangigkeiten der einzelnen Befehle gezeigt und dabei die Probleme, die bei einer parallelen Bearbeitung auftreten, besser erkenntlich. Die Darstellung besteht aus Knoten und Kanten, wobei an den Kanten jeweils eine verzögerungszyklentabelle V-Tab angeordnet ist, die angibt, ob ein verzögerungszyklus zwischen zwei aufeinanderfolgenden Befehlen erforderlich ist. Die erste Zahl zeigt die verzögerungszyklen, die durch explizite NO-OPERATION (noop) Instruktionen in der Befehlssequenz sichergestellt werden müssen, die zweite Zahl die durch Pipelinekonflikte bedingte Anzahl von Verzögerungszyklen, die im Programm mit Hilfe von s-noop-Befehlen symbolisiert werden. Zum Beispiel ist bei den integer-Befehlen ein Verzögerungszyklus erforderlich, wenn der Befehl 2 direkt nach Befehl 1 ausgeführt wird. Dagegen ist der Befehl 3 unabhängig von der Ausführung des Befehles 2, so daß diese Befehle parallel ausführbar sind. Er kann aber aufgrund der Datenabhangigkeit nur nach dem Befehl 1 ausgeführt werden, da sonst die Speicheradresse in Register r4 falsch wäre. Entsprechendes gilt auch für die Gleitpunktbefehle, die auf der rechten Seite des Diagramms dargestellt sind. Hier sind in V-Tab Verzögerungszyklen aufgrund von Datenabhangigkeit an der ersten Position angegeben; Verzögerungszyklen, die aufgrund von Pipelinekonflikten vorliegen, an der zweiten Position. Das bedeutet z.B. daß der Befehl 8 "s.s" erst dann ohne zusätzliche Verzögerungszyklen ausgeführt werden kann, wenn nach Ausführung des Befehles 7 "abs s".zwei weitere Taktzyklen verstrichen sind.

Weiterhin ist in Figur 1 die Abhängigkeit zwischen den Befehlen "add.s" und "abs.s" angegeben. Z.B. kann "add.s" durch dieselbe Verarbeitungseinheit nach "abs.s" erst nach drei Verzögerungszyklen ausgeführt worden. Umgekehrt kann "abs.s" erst zwei Verzögerungszyklen nach "add.s" ausgeführt werden. Bei Bearbeitung auf verschiedenen Einheiten besteht diese Abhängigkeit nicht.

Bevor das erfindungsgemäße Verfahren im einzelnen erläutert wird, sind noch einige Begriffe zu definieren, die im Verfahren verwendet werden:
1. Blockierungsstelle L, diese ist gesetzt, wenn ein Befehl mindestens einen Verzögerungszyklus zu einem der direkt nachfolgenden Befehle verursacht.
2.Nachfolgezahl, diese Zahl gibt an, wieviel datenabhängige Nachfolgebefehle auf einen Befehl folgen. Je mehr Nachfolger ein Befehl hat, desto höher ist seine Priorität bei der Einordnung der Befehle in die Befehlsgruppen.
3. Distanzwert, er gibt die maximale Entfernung in Taktzyklen zwischen dem betrachteten Befehl und dem letzten Befehl im Diagramm an. Dabei sind auch die Verzögerungszyklen zu berücksichtigen. Es sei:
   d (n, n') die maximale Anzahl von Verzögerungszyklen zwischen einem Befehl n und einem direkt datenabhängigen Nachfolgebefehl
   n' und h (n') der Distanzwert von n', dann ergibt sich der

Distanzwert von n aus
h (n): = 0, wenn die Anzahl der Nachfolger gleich 0 ist, oder
h(n) = h (n') + d (n, n') + 1, wobei bei mehreren direkten Nachfolgern n' der maximale Wert genommen wird.

Diese Werte sind in Wertetabellen W-Tab eingefügt, die zur Verdeutlichung an den einzelnen Knoten des Diagramms der Figur 1 angegeben sind. Von links ausgehend ist an der ersten Stelle die Blockierungsstelle L, an der zweiten Stelle die Nachfolgezahl, an der dritten Stelle der Distanzwert angegeben. Zum Beispiel ist bei dem Befehl 1 "lw" die Blockierungsstelle L gesetzt, da ein Verzögerungszyklus folgt; die Nachfolgezahl ist 2, da zwei datenabhängige Befehle direkt folgen; der Distanzwert ist 4 zwischen dem ersten Befehl und dem Befehl 9. Entsprechend können die anderen Wertetabellen, die den anderen Knoten zugeordnet sind, interpretiert werden.

Das erfindungsgemäße Verfahren wird nunmehr mit Hilfe des Diagramms der Figur 1 und unter Verwendung von Tabelle 1 und Tabelle 2 weiter erläutert. Tabelle 1 zeigt, wie nacheinander die einzelnen Befehle des Programmstückes behandelt werden und dann entsprechend Tabelle 2 zu Befehlsgruppen zusammengefügt werden, die von den Verarbeitungseinheiten des superskalaren Prozesses parallel ausführbar sind. Dabei ist hier als Beispiel vorausgesetzt, daß der superskalare Prozessor Datenwrote mit einer Breite von 3 Befehlen laden kann.

Die Untersuchung des Programmstückes erfolgt immer mit den in Diagramm nach Figur 1 ersten Befehlen, die keine Vorgängerbefehle haben, von denen sie datenabhängig sind. Anschließend erfolgt die Untersuchung der diesen Befehlen nachfolgenden Befehle und es wird immer untersucht, in welche Befehlsgruppe ein Befehl dann einzuordnen ist. Ziel ist es also, die Befehle in die Befehlsgruppen so einzuordnen, daß die Anzahl der erforderlichen Verzögerungszyklen minimal wird. Dieses Ziel wird mit folgenden Verfahrensschritten erreicht:

Im ersten Schritt wird für jeden Befehl die Blockierungsstelle, die Nachfolgezahl, der Distanzwert berechnet und in die Wertetabelle W-Tab eingespeichert. In der V-Tab stehen die Verzögerungszyklen.

Im zweiten Schritt wird dafür gesorgt, daß alle Befehle unmarkiert sind.

Im dritten Schritt wird eine erste Liste CS gebildet, in die die Befehle aufgenommen werden, die keinen unmarkierten Vorgängerbefehl haben.

Im vierten Schritt wird überprüft, ob die erste Liste CS leer ist oder nicht und für den Fall, daß die erste Liste leer ist, das Verfahren beendet.

Im fünften Schritt werden diejenigen.unmarkierten Befehle aus der ersten Liste bestimmt, die ausführbar werden nach einer minimalen Anzahl von Verzögerungszyklen und aus diesen Befehlen wird eine zweite Liste RS gebildet,

Im sechsten Schritt wird nach einem heuristischen Auswahlverfahren einer der in der zweiten Liste enthaltenen Befehle ausgewahlt und für die Einordnung in die Befehlsgruppen vorgesehen.

Im siebten Schritt wird der ausgewählte Befehl in eine der Befehlsgruppen in einer Komponente eingefügt. Dazu wird zunächst der frühest mögliche Zyklus bestimmt, in dem der in Schritt 6 selektierte Befehl ausgeführt werden kann. Danach wird die Befehlsgruppe gewählt, die in diesem Taktzyklus oder aber möglichst bald danach ausgeführt wird, und in die der Befehl unter Berücksichtigung ggf. vorhandener, durch die Architektur des Prozessors bedingter, Gruppierungsrestriktionen plaziert werden kann. Leere Stellen innerhalb der Befehlsgruppe vor dem angeordneten letzten Befehl müssen mit s-noop Befehlen aufgefüllt werden.

Im Schritt 8 wird der eingefügte Befehl markiert und aus der Liste CS entfernt. Es wird mit Schritt 3 weiter verfahren.

Das heuristische Auswahlverfahren (Schritt 6) kann z.B. in folgender Weise erfolgen:
- Zunächst werden die Befehle in der zweiten Liste RS ausgewählt, deren Blockierungsstelle L gesetzt ist. Gibt es nur einen derartigen Befehl, dann ist dieser Befehl ausgewählt. Gibt es mehrere derartige Befehle oder gibt es keinen Befehl mit einer gesetzten Blockierungsstelle, dann wird folgendermaßen weiter vorgegangen:
- Es werden aus der zweiten Liste Befehle ausgewählt, die den größten Distanzwert haben. Gibt es mehrere Befehle mit größten Distanzwert, dann werden aus diesen die Befehle ausgewählt, die die größte Nachfolgezahl haben.
- Immer dann, wenn mehrere gleichwertige Befehle ermittelt worden sind, kann einer dieser Befehle frei gewählt werden und in die Befehlsgruppe entsprechend Schritt 7 eingefügt werden. Das heuristische Auswahlverfahren nach Schritt 6 kann selbstverständlich auch auf andere Weise erfolgen, z.B. können die einzelnen dargestellten Schritte vertauscht werden, was aber unter Umständen zu schlechteren Lösungen führt.

**Tabelle 1**

| | *CS* | *RS* | *Befehl (Zyklus)* |
|---|---|---|---|
| 1 | lw;l.s | lw;l.s | l.s (1) |
| 2 | lw,add.s;abs.s | lw | lw (1) |
| 3 | add;sl;add.s;abs.s | sl; add.s; abs.s | abs.s (3) |
| 4 | sl s.s;add;add.s | add; sl; | sl (2) |
| 5 | add.s; s.s;add | add | add (3) |
| 6 | sub;add.s;s.s | sub; s.s; add.s | add.s (3) |
| 7 | sub;s.s | sub; s.s | sub (4) |
| 8 | s.s.. | s.s | s.s (5) |
| 9 | bgzt | bgzt | bgzt (6) |

**Tabelle 2**

| Programm Array | | | |
|---|---|---|---|
| Zyklus | KP 1 | KP 2 | KP 3 |
| 1 | l.s | lw | s-noop BG1 |
| 2 | sl | s-noop | s-noop BG2 |
| 3 | abs.s | add | add.s BG3 |
| 4 | sub | s-noop | s-noop BG4 |
| 5 | s-noop | s-noop | s-noop BG5 |
| 6 | s.s | bgzt | s-noop BG6 |

In Tabelle 1 ist in der ersten Spalte die erste Liste als CS bezeichnet, die zweite Liste als RS und die dritte Spalte gibt an, welcher Befehl ausgewählt worden ist. In der Tabelle 2 sind die einzelnen Befehlsgruppen BG gezeigt, die nach dem Verfahren entstehen. In der ersten Spalte ist der Verarbeitungszyklus angegeben, in dem die Befehlsgruppe ausgeführt wird und in einer zweiten Spalte eine erste Komponente KP1 der Befehlsgruppen BG, in einer dritten Spalte eine zweite Komponente KP2 der Befehlsgruppen BG und in einer vierten Spalte eine vierte Komponente KP3 der Befehlsgruppen BG. Innerhalb der einzelnen Befehlsgruppen sind Verzögerungszyklen mit s-noop angegeben.

Zunächst sind die beiden Tabellen 1 und 2 leer. Es wird angenommen, daß die Schritte 1 und 2 bereits durchgeführt sind. Begonnen wird somit mit Schritt 3 des Verfahrens. Zunächst werden die Knoten oder Befehle gesucht, die keinen unmarkierten Vorgänger haben. Dies sind entsprechend der Figur 1 der Befehl "lw" und der Befehl "l.s". Diese beiden Befehle werden in die erste Zeile in der Tabelle 1 in der Spalte CS eingetragen. Dann wird im Schritt 5 untersucht, welcher dieser beiden Befehle eine minimale Anzahl von Verzögerungszyklen erfordern. Beide Befehle können ohne zusätzliche Verzögerungszyklen ausgeführt werden und dementsprechend werden die Befehle in die Spalte RS eingefügt. Mit Schritt 6 wird einer der beiden Befehle ausgewählt. Da beide Befehle eine gesetzte Blockierungsstelle haben, wird der Befehl ausgewählt, der den größten Distanzwert hat und das ist der Befehl "l.s.". Dieser Befehl wird nun in der Tabelle 2 in eine Befehlsgruppe eingefügt. Unter Vereinbarung, daß die Einfügung in der Befehlsgruppe mit dem frühest zulässigen Ausführungszyklus geschieht, und das z.B. an der am weitesten links stehenden zulässigen Spalte (Komponente), dann wird der Befehl der Befehlsgruppe im Zyklus 1 der Komponente KP1 zugeordnet. Der Befehl "l.s" wird markiert und es beginnt wiederum mit Schritt 3 des Verfahrens.

Nach Schritt 3 werden die Befehle ausgewählt, die keinen unmarkierten unmittelbaren Vorgänger haben. Dies sind nun neben "lw" auch die Befehle "add.s" und "abs,s".Diese werden in die Spalte CS eingefügt. Im Schritt 5 wird nun untersucht, welche dieser Befehle nach einer minimalen Anzahl von Verzögerungszyklen bearbeitet werden können und diese in die Spalte RS eingefügt. RS enthält nur den Befehl lw, so daß dieser selektiert und ebenfalls, gemäß Schritt 7, im ersten Zyklus an zweiter Position KP2 eingefügt wird.

Es soll noch ein dritter Durchgang erläutert werden. Wieder wird mit Schritt 3 begonnen und untersucht, welche zusätzlichen Befehle keine unmarkierten Vorgangerbefehle aufweisen. Dies sind die Befehle "add" und "sl". Für alle Befehle aus CS wird Schritt 5 durchgeführt und festgestellt, welcher Befehl nach einer minimalen Anzahl von Verzögerungszyklen verarbeitungsbereit wird. Dies sind die Befehle "sl", "add.s" und "abs.s", die dann in die zweite Spalte RS eingefügt werden. Für die drei in der Spalte RS enthaltenen Befehle wird nun der Schritt 6 durchgeführt. Von denen sind nur die Befehle "abs.s" und "add.s" mit einer gesetzten Blockierungsstelle versehen, so daß derjenige mit dem größten Distanzwert ("abs.s") ausgewählt wird. Dieser muß nun in der Tabelle in die Befehlsgruppen eingefügt werden. Dabei muß berücksichtigt werden, daß "abs.s" erst einen Verzögerungszyklus nach "l.s" ausführbar ist. Er wird somit im Zyklus 3 entsprechend Schnitt 7 eingefügt.

Zum Abschluß der Erläuterung des Verfahrens wird ein vierter Durchgang geschildert. Nach Markierung des Befehls "abs.s" entsprechend Schritt 8 wird in Schritt 3 der Befehl "s.s" in die Spalte CS eingefügt. In dieser Spalte stehen zusätzlich noch die Befehle "add" "sl" und "add.s". Nur die Befehle "add" und "sl" sind ohne Verzögerungszyklus ausführbar, da "add.s" frühestens zwei Verzögerungszyklen nach abs.s ausgeführt werden darf. Zwischen "add und sl" wird ein Befehl nach Schritt 6 ausgewählt. Da beide gleiche Einträge in W-Tab haben, kann einer frei gewählt werden, z.B. "sl". Der Befehl "sl" muß nun in eine der Befehlsgruppen eingefügt werden. Es ist erkennbar, daß der Befehl "sl" unmittelbar nach Ausführung des Befehles "lw" ausführbar ist, so daß er im zweiten Zyklus angeordnet werden kann. Entsprechend Schritt 7 wird er somit der ersten Komponente KP1 der zweiten Befehlsgruppe BG2 zugeordnet.Der Befehl "sl" wird markiert und dann anschließend mit Schritt 3 des Verfahrens wieder weiter gefahren.

Dies erfolgt solange, bis keine Befehle in die Spalte 1 der Tabelle 1 mehr enthalten sind. Als Ergebnis ergeben sich Befehlsfolgen BG1 bis BG6 entsprechend der Tabelle 2.

Es wird darauf hingewiesen, daß immer dann, wenn nach Schritt 6 mehrere gleichartige Befehle vorliegen, einer der Befehle freigewählt werden kann und dementsprechend die in einer Befehlsgruppe enthaltenen Befehle entsprechend dieser Wahl unterschiedlich sein können. Alle bisher nicht besetzten Stellen in den Befehlsgruppen BG können mit snoop-Befehlen ergänzt werden. Wie das Programm Array der Tabelle 2 zeigt, müssen nur zwei Verarbeitungseinheiten Gleitpunktbefehle verarbeiten können.

Die graphische Darstellung der Tabelle 2 zeigt, daß aus einem Programm eine zweidimensionale Darstellung entwickelt wird. Damit kann der superskalare Prozessor nicht nur einen Befehl pro Zyklus holen, sondern er kann eine Gruppe von Befehlen holen,die alle parallel ausgeführt werden können, ohne daß Konflikte entstehen. Das Ziel der Codeerzeugung für superskalare Prozessoren, das darin besteht, daß eine maximale Anzahl von Befehlen parallel verarbeitbar sind, ist dann erreicht. Superskalare Prozessoren erfordern also keine Befehlsfolgen, sondern Folgen von Befehlsgruppen. Dies kann sehr gut an der Tabelle 2 abgelesen werden. Die Anzahl der Komponenten in dem Programm array hängt ab von der Anzahl der Befehle,die der Prozessor zugleich laden kann.

Es ist noch zu erwähnen, daß die Einfügung der snoop Befehle nur für die Erläuterung erforderlich war. Für die Codeerzeugung werden die Zeilen des arrays hintereinander angeordnet, z.B. von links nach rechts und die snoop-Befehle gestrichen.

## Patentansprüche

1. Verfahren zur maschinellen Erzeugung von nebenläufig bearbeitbaren Befehlsgruppen aus einem Programm für superskalare Prozessoren,
a) bei dem für jeden Befehl des Programms in einer Wertetabelle (W-Tab)
- eine Blockierungsstelle gesetzt wird, wenn vor Ausführung eines direkt datenabhängigen Befehles ein Verzögerungszyklus einzuschieben ist,
- eine Nachfolgezahl eingefügt wird, die angibt, wieviele datenabhängige Befehle direkt folgen,
- ein Distanzwert eingetragen wird, der die maximale Anzahl von Taktzyklen zum letzten der datenabhängigen Befehle angibt,
b) bei dem in einer Verzögerungszyklentabelle (V-Tab) für jeden Befehl angegeben ist, wieviel Verzögerungszyklen zwischen den Befehlen liegen,
c) bei dem jeder der Befehle in folgenden Schritten in Befehlsgruppen eingeordnet werden:
aa) zunächst werden alle Befehle unmarkiert gesetzt,
ab) alle Befehle, die keinen vorhergehenden datenabhängigen unmarkierten Befehl haben, werden in einer ersten Liste (CS) abgespeichert,
ad) diejenigen Befehle aus der ersten Liste (CS) werden ausgewählt, die nach einer minimalen Anzahl von Verzögerungszyklen ausführbar sind und diese Befehle werden in einer zweiten Liste (RS) abgespeichert,
ae) nach einem heuristischen Auswahlverfahren wird ein Befehl ausgewählt,
af) jeder ausgewählte Befehl wird in eine aus Komponenten bestehende Befehlsgruppe so eingeordnet,
daß der Befehl der Befehlsgruppe mit dem frühest zulässigen Ausführungszyklus zugeordnet wird und das entsprechend einer vorgebbaren Reihenfolge in eine der Komponenten,
ag) der eingeordnete Befehl wird markiert,
ah) die Schritte ab) bis ag) werden solange durchgeführt bis alle Befehle des Programms bearbeitet sind.

2. Verfahren nach Anspruch 1,
bei dem das heuristische Verfahren darin besteht, daß derjenige Befehl aus der zweiten Liste (RS) ausgewählt wird,
- dessen Blockierungsstelle gesetzt ist,
- bei fehlender gesetzter Blockierungsstelle der Befehl mit maximalem Distanzwert und maximaler Nachfolgezahl,
- wobei bei mehreren ermittelten Befehlen ein beliebiger dieser Befehle ausgewählt wird.

3. Verfahren nach Anspruch 1 oder 2,
bei dem die Anzahl der Komponenten pro Befehlsgruppe entsprechend der Anzahl der Befehle festgelegt wird, die ein Prozessor gleichzeitig laden kann.

## Claims

1. Process for the machine generation of secondary processable instruction groups from a program for superscalar microprocessors,
a) in which for each instruction of the program in a value table (W-Tab)
- a blocking position is set when before execution of an instruction directly dependent on data a delay cycle is to be inserted,
- a succession number is inserted which indicates how many data-dependent instructions follow directly,
- a distance value is entered which specifies the maximum number of clock cycles up to the last of the data-dependent instructions,
b) in which in a delay cycle table (V-Tab) it is specified for each instruction how many delay cycles occur between the instructions,
c) in which each of the instructions is classified into instruction groups in the following steps:
aa) at first all the instructions are set unmarked,
ab) all the instructions which have no preceding data-dependent unmarked instruction are stored in a first list (CS)
ad) those instructions from the first list (CS) are selected which can be executed after a minimum number of delay cycles, and these instructions are stored in a second list (RS),
ae) an instruction is selected in accordance with a heuristic selection process,
af) each selected instruction is classified into an instruction group comprising components in such a way that
the instruction is assigned to the instruction group having the earliest permissible execution cycle, and this corresponding to a prescribable sequence into one of the components,
ag) the classified instruction is marked,
ah) steps ab) to ag) are carried out until all the instructions of the program are processed.

2. Process according to Claim 1,
in which the heuristic process consists in that that instruction is selected from the second list (RS),
- whose blocking position is set,
- in the event of a missing set blocking position the instruction with maximum distance value and maximum succession number,
- in the case of a plurality of instructions determined, an arbitrary one of these instructions being selected.

3. Process according to Claim 1 or 2, in which the number of the components per instruction group is fixed in accordance with the number of the instructions which a microprocessor can load simultaneously.

## Revendications

1. Procédé de production automatique de groupes d'instructions pouvant être traités de manière parallèle à partir d'un programme pour processeurs superscalaires,
a) dans lequel, pour chaque instruction du programme, dans une table de valeurs (W-Tab)
- on prévoit un emplacement de blocage dès lors qu'il est nécessaire d'introduire un cycle de retard avant l'exécution d'une instruction directement dépendante des données,
- on insère un nombre successeur qui indique combien d'instructions dépendantes des données suivent directement,
- on entre une valeur d'écart qui indique le nombre maximal de cycles d'horloge jusqu'à la dernière des instructions dépendantes des données,
b) dans lequel sera indiqué pour chaque instruction, dans une table de cycles de retard (V-Tab), combien de cycles de retard se trouvent entre les instructions,
c) dans lequel on classe chacune des instructions dans des groupes d'instructions, selon les phases suivantes :
aa) on place d'abord toutes les instructions sans marquage
ab) on enregistre toutes les instructions, qui n'ont pas d'instruction précédente dépendante des données non marquée, dans une première liste (CS),
ad) on sélectionne parmi les instructions de la première liste (CS) celles qui peuvent être exécutées après un nombre minimal de cycles de retard, et on enregistre ces instructions dans une deuxième liste (RS),
ae) on sélectionne selon une méthode de sélection heuristique une instruction,
af) on classe chaque instruction sélectionnée dans un groupe d'instructions constitué de composantes,
de manière a affecter l'instruction au groupe d'instructions avec le premier cycle d'exécution possible, et ceci selon une séquence prédéfinissable dans l'une des composantes,
ag) on marque l'instruction classée
ah) on répète les phases ab) à ag) jusqu'à ce que toutes les instructions du programme soient traitées.

2. Procédé selon la revendication 1,
dans lequel la méthode heuristique consiste à sélectionner parmi les instructions de la deuxième liste (RS)
- celle dont l'emplacement de blocage est prévu
- à défaut d'emplacement de blocage prévu, l'instruction ayant la valeur d'écart maximale et le nombre successeur maximal.
- en cas de plusieurs instructions déterminées, l'une quelconque de ces instructions étant sélectionnée.

3. Procédé selon l'une des revendications 1 ou 2,
dans lequel on définit le nombre de composantes par groupe d'instructions en fonction du nombre d'instructions qu'un processeur peut charger simultanément.
